# EUROPEAN PATENT SPECIFICATION

(11) **EP 0 946 422 B1**
(45) Date of publication and mention of the grant of the patent: **13.03.2002**
(21) Application number: 97912072.2
(22) Date of filing: 14.11.1997
(51) Int. Cl.: C02F 1/00, C02F 11/04, C02F 1/44, C05F 3/00

(54) **METHOD FOR SEPARATING ORGANIC WASTE**
METHODE ZUR ABTRENNUNG VON ORGANISCHEN ABFÄLLEN
PROCEDE DE SEPARATION DE DECHETS ORGANIQUES

(30) Priority: 15.11.1996 DK 128996
(43) Date of publication of application: 06.10.1999
(73) Proprietor: FUNKI MANURA A/S, 6400 Sonderborg (DK)
(72) Inventor: BASTHOLM, Jeppe, Christian, DK-6400 Soenderborg (DK); GRAMKOW, Asger, DK-6440 Augustenborg (DK)
(74) Representative: Nielsen, Leif
(86) International application number: DK9700522
(87) International publication number: WO9822393

(56) References cited:
- EP-A- 0 603 684
- EP-A- 0 661 238
- DE-A- 3 823 950
- DE-C- 4 212 196
- DK-U- 9 500 113

## Description

### Background of the invention.

The present invention relates to a method for separating organic waste, preferably manure, which comprises an aqueous solution containing components that may be transformed into nutritive salts, where the waste is separated for removal of large particles, where the waste is digested while producing methane gases, where the digested waste is degassed, and where the degassed liquid fraction is filtrated by osmotic filtration as the liquid fraction is conducted to a RO filter, whereby a pure water fraction is separated and conducted to a recipient

The invention therefore relates to a method, where a separation of organic waste is achieved in order to transform the liquid part to pure water which may be recycled and/or discharged directly to recipient. During this purification it is wished to produce useful components in the form of nutritive salts or fertilizing products, so that residual products which have to be deposited do not appear.

An example of such prior art method as mentioned above is disclosed in DK 95 00113. This method is expensive to use due to the fact that plants for effecting the method have been energy demanding and at the same time have created residual products which could not be used.

The present invention has come into being in connection with treatment of animal livestock manure. Therefore, the invention will be explained especially in connection with an organic waste in the form of raw manure. However, the invention may also be used in connection with other kinds of organic waste, as e.g. waste water from food production, fish industry, slaughterhouses, and the like.

It is the purpose of the present invention to indicate a method of the known kind as in the introduction whereby it becomes possible to perform a separation with the least possible use of energy, and where at the same time there is created a possibility for making pure water and useful nutritive salts or fertilizing products.

This is achieved according to the present invention with a method which is peculiar in that the degassing is performed in a process, where the content of CO₂ and ammonia is removed or reduced as nutritive salts are separated for utilization, that a residual fraction is conducted from RO filter to an evaporation and concentration process where concentrating and separating of the nutritive salts is performed together with removal of a residual fraction of ammonia, that the gasses produced by the digestion is conducted to a power/heating plant producing heat, which is used for providing energy to the evaporation and concentration step, that heat energy from the concentration step is used for providing energy to the degassing step.

By the method it becomes possible to exploit two main components in the organic waste, namely the nutritive salts in the form of phosphorus and nitrogen products and products of potash together with the carbon part, in an energy production taking part in the process itself so that the total energy consumption by the separation is minimized.

The organic waste is first conducted to a separation. The separation may be divided into several steps. Thus there may be performed a coarse separation in a screw press where the waste is compressed so that two fractions appear. One fraction constitute a fibre part that may have a dry matter content between 35 - 40 weight%. This dry matter fraction, which typically constitutes between 5 and 15 weight of the of the total amount of waste, may be used directly for improving the earth. The other fraction is a water fraction, which usually constitutes between 95 - 85 weight% of the total amount of waste. This liquid fraction will contain almost all nutritive salts. This liquid fraction is then filtrated in a subsequent filtrating step, that may be constituted by a microfiltrating. Hereby particles larger than about 0.5 mm are sorted out. The particle fraction sorted out may be conducted back to the screw press in order to be processed once again.

The water fraction passing through the microfilter is thereafter conducted further on to a digestion step where a digestion under the forming of methane gasses is performed.

This happens in a biogas reactor where the main part of the carbon component is reduced under the forming of methane gasses.

The methane gasses are subsequently used as energy source for running the plant. Methane gasses are thus conducted to a power/heating plant producing heat, which supplies energy to a subsequent evaporating and concentration step as will be explained below. In the power/heating plant there is also produces electric energy. The electric energy may be used externally or used for driving the apparatuses used for performing the method.

From the biogas reactor the liquid fraction is conducted further on to a degassing/column step. Possibly the liquid fraction is conducted through an ultrafiltering before the degassing step. In this way it will be possible to retain bacteria in the biogas reactor and thereby ensure an optimum digestion of the waste.

In the degassing/colurnn step the amount of ammonia and CO₂ is reduced. The degasser/column is described in the simultaneously filed International patent application WO 98/22394 with the title "Method and apparatus for separating volatile components from a liquid". As described in this patent application 99% of the carbon dioxide may be removed, just as at least 75% of the ammonia is removed. The carbon dioxide will be liberated from the liquid as the liquid is heated. A basic reaction occurs resulting in that ammonium becomes more volatile and likewise is liberated from the liquid. During the process the following balances will occur:

HCO₃⁻ < > OH⁻ + CO₂

NH₄⁺ + OH⁻ <> NH₃ + H₂O

By the process the ammonia reacts with the carbon dioxide and ammonium hydrogen carbonate NH₄HCO₃ is generated which may be stored in common, closed tanks for subsequent utilization as N fertilizer components. This part may constitute about 5 weight% of the initial waste.

After the degassing the liquid fraction is conducted via a buffer storage in the form of a mixer to a step for reverse osmosis in a RO system. In the buffer storage there is performed a mixing of the liquid fraction with a liquid from an evaporation and concentration step which will become explained below. Hereby it will become possible to harmonize the temperature and adjust this to the RO system which cannot stand up to high temperatures. In this way, the buffer storage acts simultaneously as a mixing step and a capacity control. From the buffer storage the liquid is conducted to the RO system, where impurities in the form of salts, fatty acids, alcohols, ammonium, etc., are filtered off. Hereby appears a pure water fraction which subsequently may be recycled, conducted to sewer or open recipient, or be utilized for irrigation on agricultural fields. The concentrate from the RO system constitutes about 30% of the supplied liquid.

The concentrate or dry matter fraction is conveyed to the above mentioned evaporation and concentration step in which there is performed a further concentration. Hereby water is separated so that a residual product is produced which appears as a phosphorus/potash fertilizer product. This fertilizer fraction constitutes typically between 2 and 5 weight% of the initial waste. The evaporation and concentration step will act according to a principle described in European patent no. 544.768.

The concentration step will receive heat energy for the power/heating plant on the basis of the energy produced by the burning of methane gas. The residual heat appearing in the concentration step will -be used afterwards in the degassing step. Hereby the need for a supply of external energy is reduced considerably. The residual energy in the form of heat appearing after the degassing step appears as hot water with a temperature of about 80° . This may be utilized as heat for the process or as space heating.

Thus, by the method according to the present invention a separation of an organic waste will take place so that the following output will be produced:
- N fertilizer products,
- P-K fertilizer products,
- pure water,
- electric energy which may power the method and which furthermore may create an electric surplus of about 50 - 75%, together with
- heat energy.

By separating manure typically a fibre fraction or humus fraction of about 5% will appear. Of the remaining 95% liquid fraction about 85% will appear as pure water. About 5% will appear as concentrated fertilizer product with a content of P fertilizer substances and K fertilizer substances. The last 5% will appear as liquid fertilizer products in the form of inorganic N fertilizer substances.

### Description of the drawing.

In the following the invention will be explained more closely with reference to the attached schematic drawing, where
- Fig. 1: shows a principal draft for configuring a plant for use in performing the method according to the invention, and
- Fig. 2: shows an image of an alternative embodiment for a plant for use in performing the method according to the invention.

In both figures the same or corresponding elements are denoted with the same references. A specific explanation to single parts of the apparatus in each of the figures will not be given.

1 denotes a supply of raw manure. 2 denotes a screw press. 3 denotes a microfilter. 4 is a biogas reactor where the waste is digested. 5 is a power/heating plant. 6 is a concentrator/evaporator. 7 is a degasser/column. 8 is a mixer. 9 is a RO filter. The produced output is heat 10, N fertilizer products 11, pure water 12, P-K fertilizer products 13 and electric power 14. Biogas 15 is produced from the biogas reactor 4, which is conducted to the power/heating plant 5. Heat 16 is produced from the power/heating plant and conducted to the concentrator 6. Residual heat 17 from the concentrator is conducted to the degasser 7.

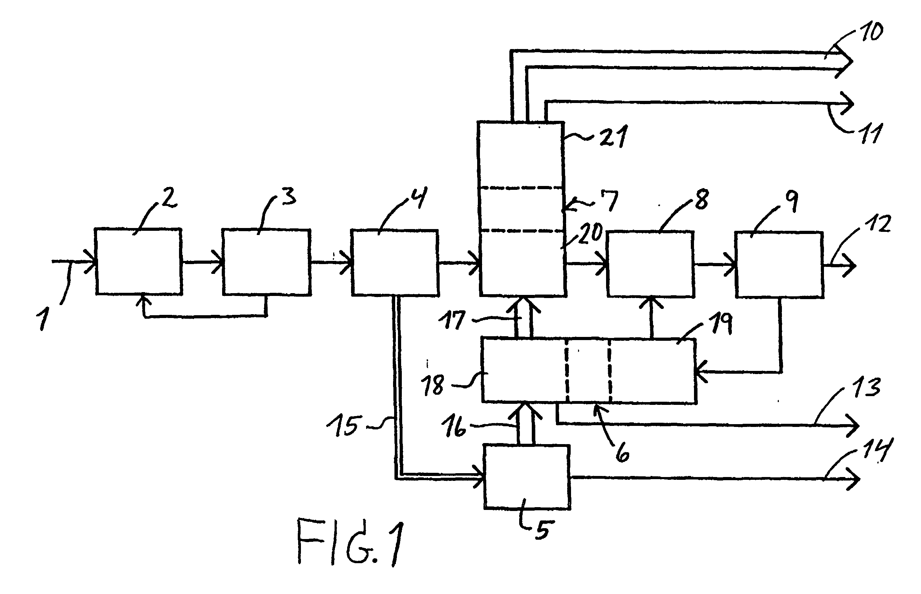

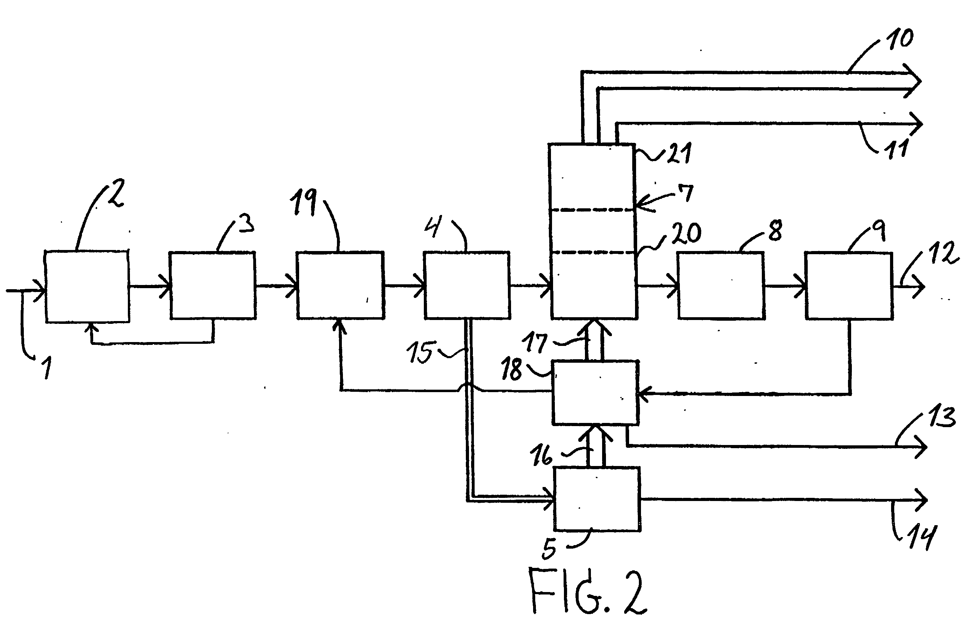

The concentrator/evaporator 6 consists of a concentrator 18 and an evaporator 19. The evaporator 19 is, as shown on Fig. 1, located after the biogas reactor 4. It will also be possible to place the evaporator 19 before the biogas reactor 4 as shown on Fig. 2. If the evaporator part 19 is located before the biogas reactor it will be necessary that it has a capacity about 3 times the capacity which is necessary if the evaporator 19 is located after the biogas reactor 4. In larger plants the embodiment shown on Fig. 1 is preferred. In lesser plants, which for example are utilized in separate farm plants, it will be preferred to place the evaporator 19 before the biogas reactor 4. Hereby, the fraction to be transferred to a separately located biogas reactor will be considerably reduced. The degasser/column 7 consists of a degasser 20 and a column 21.

The purpose of the screw press 2 is to separate fibres and other larger particles from the entering amount of waste. Typically, a sorting out of particles larger than about 1.5 mm will take place. There will be a power demand of about 1.5 kW for a separator with a capacity of 40 tonnes/day.

The microfilter 3 has the function to ensure the subsequent parts of the plant against passing through of larger particles. Thus the microfilter 3 ensures that a liquid fraction containing particles larger than about 0.5 mm is not forwarded. The filter 3 has a power demand of 2.4 kW and a capacity of 186 t/day. As output from the filter about 37.2 tonnes filtrated manure and about 148.8 tonnes return flow appear.

The biogas reactor 4 has the purpose of digesting the manure so that the carbon content is reduced to a minimum while at the same time gas is produced which is utilized as energy source for running the plant. A possible subsequent ultrafiltration (not shown on the figures) ensures that liquid leaving the biogas reactor 4 is free from both bacteria and particles. Thus a bacteria culture will be retained and kept at a maximum in the biogas reactor 4. The biogas reactor 4 has a capacity of 37.2 tonnes/day in order to receive the output from the microfilter 3. About 37.2 tonnes of carbon reduced manure and 1000 Nm³/day, of which 2/3 is methane CH₄, appear as output from the biogas reactor 4.

The power/heating plant 4 produces electricity and heat energy by means of the gas produced. The plant has a capacity of 85 kW. An output of about 160 kW heat and about 85 kW electric power result from the input coming from the biogas reactor.

The degasser 20 has the purpose of removing CO₂ and reducing the content of ammonia in the manure. The degasser 20 will have a capacity of 37.2 tonnes/day and a power demand of 160 kW heat. The degasser will have an input of about 37.2 tonnes of carbon reduced manure per day and about 4.2 tonnes return flow from the column 21. As output appear from the degasser about 35.3 degassed manure, 6.1 tonnes of steam with NH₃, and 160 kW heat at 100°C.

The column 21 has the purpose of concentrating the ammonia. The column has a capacity of 6.1 tonnes of steam per day with NH₃ and has a power demand of 160 kW heat. At this input an output of about 1.9 tonnes of ammonia water and 4.2 tonnes of purified condensed steam together with 150 kW heat 10 at 70°C will appear.

The mixer 8 has the purpose of mixing the liquids flowing to it from the degasser 20 and the evaporator 19 and will at the same time operate as buffer for the RO plant. The mixer 8 has a capacity of 46.1 tonnes/day and has a power demand of 1 kW. The mixer will have an input of 35.3 tonnes of degassed manure and 10.8 tonnes of distillate. As output from the mixer 46.1 of mixed manure will appear per day.

The RO filter 9 has the purpose of purifying the entering liquid of ions so that the liquid fraction 12 appears as completely pure water. The RO filter 9 has a capacity of 46.1 tonnes per day, and from the input of mixed manure coming from the mixer 8 an output of 34.1 of pure water and 12 tonnes of RO concentrate will appear.

The evaporator 19 has the function of concentrating the P-K components and remove the residual ammonia which is in the entering liquid. The evaporator 19 has a capacity of 12 tonnes per day and a power demand of 20 kW. The evaporator 19 will have an input of 12 tonnes of RO concentrate per day and 6.1 tonnes return flow for the concentrator 18. The output appearing hereafter will be 10.8 tonnes of distillate and 7.3 tonnes of "medium" concentrate.

The concentrator 18 has the function of concentrating the P-K components. It has a capacity of 7.3 tonnes per day and a power demand of 160 kW. For the evaporator 19 an input of the 7.3 tonnes of "medium" concentrate will appear. The output from the concentrator 18 will be 6.1 tonnes of condensate and 1.2 tonnes of end concentrate with a content of P-K fertiliser products.

The above is given as an example and other dimensioning for a plant will be possible.

## Claims

1. A method for separating organic waste, preferably manure (1), which comprises an aqueous solution containing components that may be transformed into nutritive salts, where the waste is separated for removal of large particles, where the waste is digested while producing methane gases (15), where the digested waste is degassed, and where the degassed liquid fraction is filtrated by osmotic filtration as the liquid fraction is conducted to a RO filter (9), whereby a pure water fraction (12) is separated and conducted to a recipient, **characterised in that** the degassing is performed in a process (7), where the content of CO₂ and ammonia is removed or reduced as nutritive salts (11 and 13) are separated for utilization, that a residual fraction is conducted from RO filter (9) to an evaporation and concentration process (6) where concentrating and separating of the nutritive salts (13) is performed together with removal of a residual fraction of ammonia, that the gasses (15) produced by the digestion is conducted to a power/heating plant (5) producing heat (14), which is used for providing energy to the evaporation and concentration step (6), that heat energy (10) from the concentration step is used for providing energy to the degassing step (7).

2. A method according to claim 1, **characterised in that** the removal of particles takes place in two or more steps (2,3).

3. A method according to claim 2, **characterised in that** the first step is a coarse separation in a screw press (2) resulting in a fibre fraction with a dry content between 35 and 40 weight% and a water fraction constituting about 95 - 85%, and which is conducted to a subsequent microfiltrating (3) for removing particles larger than about 0,5 mm.

4. A method according to claim 1, 2 or 3, **characterised in that** in connection with the digestion there is performed an ultrafiltration of the water fraction to retain the bacteria and to ensure optimum digestion.

5. A method according to any preceding claim, **characterised in that** the degassing is performed in combination with an evaporation in a column (7,21) from which is extracted more volatile gas components in the form of ammonia and CO₂.

6. A method according to any preceding claim, **characterised in that** a buffer store (8) is used for mixing the degassed liquid fraction which is mixed with a liquid fraction from the evaporation and concentration step (6) so that the temperature level is adjusted to the RO step (9).

7. A method according any preceding claim, **characterised in that** the degassed liquid fraction is conducted to the RO filter (9) via a buffer store (8).

## Patentansprüche

1. Verfahren zum Abtrennen von organischem Abfall, vorzugsweise Dung (1), der eine wäßrige Lösung umfaßt, enthaltend Komponenten, die in Ernährungssalze umgewandelt werden können, worin der Abfall zum Entfernen großer Partikel getrennt wird, worin Abfall während dem Erzeugen von Methangasen (15) aufgeschlossen wird, worin der aufgeschlossene Abfall entgast wird und die entgaste flüssige Fraktion durch osmotische Filtration filtriert wird, während die flüssige Fraktion zu einem RO-Filter (9) geführt wird, wobei eine reine Wasserfraktion (12) abgetrennt und zu einem Aufnahmebehälter geführt wird, **dadurch gekennzeichnet, daß** das Entgasen in einem Verfahren (7) durchgeführt wird, worin der Gehalt an CO₂ und Ammoniak entfernt oder verringert wird, wenn Ernährungssalze (11 und 13) zur Verwendung abgetrennt werden, daß eine restliche Fraktion vom RO-Filter (9) zu einem Verdampfungs- und Konzentrationsverfahren (6) geführt wird, wo ein Konzentrieren und Abtrennen der Ernährungssalze (13) zusammen mit dem Entfernen einer restlichen Fraktion Ammoniak durchgeführt wird, daß die durch Aufschluß erzeugten Gase (15) zu einer Energie/Wärmeanlage (5) geführt werden, die Wärme (14) erzeugt, die eingesetzt wird, um für den Verdampfungs- und Konzentrationsschritt (6) Energie zu liefern, daß Wärmeenergie (10) vom Konzentrationsschritt eingesetzt wird, um dem Entgasungsschritt (7) Energie zuzuführen.

2. Verfahren nach Anspruch 1, **dadurch gekennzeichnet, daß** das Entfernen von Partikeln in zwei oder mehreren Schritten (2,3) stattfindet.

3. Verfahren nach Anspruch 2, **dadurch gekennzeichnet, daß** der erste Schritt eine grobe Abtrennung in einer Schraubenpresse (2) darstellt, resultierend in einer Faserfraktion mit einem Trockengehalt zwischen 35 und 40 Gew.-% und einer Wasserfraktion, die etwa 95 bis 85% darstellt, und die zu einer nachfolgenden Mikrofiltration (3) zum Entfernen von Partikeln größer als etwa 0,5 mm geführt wird.

4. Verfahren nach Anspruch 1, 2 oder 3, **dadurch gekennzeichnet, daß** im Zusammenhang mit dem Aufschluß eine Ultrafiltration der Wasserfraktion durchgeführt wird, um Bakterien zurückzuhalten und einen optimalen Aufschluß sicherzustellen.

5. Verfahren nach mindestens einem der vorhergehenden Ansprüche, **dadurch gekennzeichnet, daß** das Entgasen in Kombination mit einem Verdampfen in einer Säule (7,21) durchgeführt wird, von der flüchtigere Gaskomponenten in Form von Ammoniak und CO₂ extrahiert werden.

6. Verfahren nach mindestens einem der vorhergehenden Ansprüche, **dadurch gekennzeichnet, daß** ein Pufferspeicher (8) eingesetzt wird zum Mischen der entgasten flüssigen Fraktion, die mit einer flüssigen Fraktion aus dem Verdampfungs- und Konzentrationsschritt (6) so gemischt wird, daß der Temperaturlevel auf den RO-Schritt (9) eingestellt wird.

7. Verfahren nach mindestens einem der vorhergehenden Ansprüche, **dadurch gekennzeichnet, daß** die entgaste flüssige Fraktion zum RO-Filter (9) über einen Pufferspeicher (8) geführt wird.

## Revendications

1. Méthode pour séparer des déchets organiques, de préférence de l'engrais (1), qui comprend une solution aqueuse contenant des composants qui peuvent être transformés en sels nutritifs, où les déchets sont séparés pour l'enlèvement de grandes particules, où les déchets sont digérés tout en produisant des gaz méthane (15), où les déchets digérés sont dégazés et où la fraction de liquide dégazé est filtrée par filtration osmotique tandis que la fraction liquide est conduite à un filtre RO (9), ainsi une fraction d'eau pure (12) est séparée et conduite à un récipient, **caractérisée en ce que** le dégazage est accompli dans un procédé (7) où la teneur en CO₂ et en ammoniaque est supprimée ou réduite tandis que des sels nutritifs (11 et 13) sont séparés pour une utilisation, qu'une fraction résiduelle est conduite du filtre RO (9) à un procédé d'évaporation et concentration (6) où la concentration et la séparation des sels nutritifs (13) est accomplie en même temps que l'enlèvement d'une fraction résiduelle d'ammoniaque, que les gaz (15) produits par la digestion sont conduits à une installation de puissance/chauffage (5) produisant de la chaleur (14), qui est utilisée pour produire de l'énergie pour l'étape d'évaporation et concentration (6), que de l'énergie thermique (10) de l'étape de concentration est utilisée pour produire de l'énergie pour l'étape de dégazage (7).

2. Méthode selon la revendication 1, **caractérisée en ce que** l'enlèvement des particules a lieu en deux étapes ou plus (2,3).

3. Méthode selon la revendication 2, **caractérisée en ce que** la première étape est une séparation grossière dans une presse à vis (2) ayant pour résultat une fraction de fibres avec une teneur sèche entre 35 et 40% en poids et une fraction d'eau constituant environ 95-85% et qui est conduite à une microfiltration (3) subséquente pour l'enlèvement des particules plus grandes qu'environ 0,5 mm.

4. Méthode selon la revendication 1,2 ou 3, **caractérisée en ce qu'**avec la digestion est accomplie une ultrafiltration de la fraction d'eau pour retenir les bactéries et assurer une digestion optimale.

5. Méthode selon toute revendication précédente, **caractérisée en ce que** le dégazage est accompli en combinaison avec une évaporation dans une colonne (7,21) d'où sont extraits plus de composants de gaz volatil sous la forme d'ammoniaque et de CO₂.

6. Méthode selon toute revendication précédente, **caractérisée en ce qu'**un stockage tampon (8) est utilisé pour mélanger la fraction liquide dégazée qui est mélangée à une fraction liquide de l'étape d'évaporation et de concentration (6) de façon que le niveau de température soit ajusté à l'étape RO (9).

7. Méthode selon toute revendication précédente, **caractérisée en ce que** la fraction liquide dégazée est conduite au filtre RO (9) via un stockage tampon (8).
